# DEMANDE DE BREVET EUROPEEN

(11) **EP 1 797 768 A2**
(43) Date de publication de la demande: **20.06.2007**
(21) Numéro de dépôt: 06291892.5
(22) Date de dépôt: 08.12.2006
(51) Int. Cl.: A23G 3/00, A23G 1/00, A23G 3/42, A23G 3/54, A23G 1/54, A23L 1/236, A23L 1/09

(54) **Confiserie sans sucre comprenant du xylitol ou de l'erythritol sans effet rafraichissant**

(30) Priorité: 14.12.2005 FR 0512683
(71) Demandeur: Roquette Frères, 62136 Lestrem (FR)
(72) Inventeur: Dauchy, Bruno, 62136 Lestrem (FR); Delbaere, François, 200030 Shanghai (CN); Muller, Elsa, 62920 Gonnehem (FR); Zhou, Jing Yvette, 200030 Shanghai (CN)
(74) Mandataire: Cabinet Plasseraud

(57) **Abrégé**

La présente invention a pour objet une confiserie sans sucre riche en xylitol ou en érythritol, caractérisée en ce qu'elle comprend un mélange de xylitol ou de érythritol et de dextrines de manière à réduire l'effet rafraîchissant de ladite confiserie.

## Description

L'invention a pour objet une confiserie sans sucre, à haute teneur en xylitol ou en érythritol, caractérisée par le fait qu'elle présente un effet rafraîchissant (encore appelé « cooling-effect ») réduit.

Le « cooling-effect » ou sensation de fraîcheur en bouche est lié à la chaleur de dissolution dans l'eau négative de certains polyols, et lié également à leur vitesse de dissolution. Le xylitol est à ce niveau particulièrement efficace puisqu'il confère la sensation de fraîcheur la plus intense, le sorbitol et l'érythritol ont des cooling-effect un peu plus faibles que le xylitol, alors que les autres polyols n'en ont pas ou peu.

Lorsqu'on cherche à formuler une confiserie comprenant une teneur conséquente en xylitol, la présence de cet effet rafraîchissant en bouche n'est pas toujours avantageuse, et ce en particulier lorsque la confiserie est du chocolat. Elle est recherchée dans certains chocolats particuliers à la menthe, mais est indésirable dans les chocolats plus traditionnels tels que le chocolat noir, le chocolat blanc ou le chocolat au lait.

I1 existe sur le marché du chocolat au xylitol depuis longtemps, mais ce chocolat est toujours caractérisé par cette sensation de fraîcheur en bouche. Pour s'affranchir de cet inconvénient, il n'y avait jusqu'alors pas d'autre solution que de diminuer la teneur en xylitol du chocolat à des valeurs très faibles, et bien souvent inférieures à 10% en poids sec.

En effet, jusqu'à ce jour, il était impossible d'éliminer l'effet rafraîchissant de confiseries cristallisées au xylitol, et d'autre part il était impossible de préparer des confiseries riches en xylitol sous forme amorphe de qualité satisfaisante.

Cherchant à pallier ce problème technique, la Demanderesse a eu le mérite de trouver que l'on pouvait préparer une confiserie sans sucre riche en xylitol et sans effet rafraîchissant, en faisant comprendre à ladite confiserie un mélange amorphe de xylitol et de dextrines indigestibles.

Le principe repose sur le fait que la forme cristalline du xylitol présente une énergie de dissolution endothermique et exerce donc un effet rafraîchissant, tandis que l'énergie de dissolution de la forme amorphe n'est pas endothermique et donc dénuée d'effet rafraîchissant

Ceci doit être pondéré par la solubilité à 37°C : le mannitol par exemple a une chaleur de dissolution supérieure au sorbitol mais est moins rafraîchissant compte tenu de sa faible solubilité.

Pour préparer une confiserie comprenant du xylitol sous forme amorphe, sans toutefois que la qualité ou la stabilité de ladite confiserie s'en trouve amoindrie, la Demanderesse a trouvé qu'il convenait de préparer la confiserie à partir d'un mélange de xylitol et de dextrines indigestibles, ce qui a pour effet d'anticristalliser le xylitol, et d'augmenter la température de transition vitreuse du mélange.

Le xylitol a une température de transition vitreuse très faible, de l'ordre de -20°C, c'est à dire que pour des températures ambiantes supérieures à -20°C, le xylitol pur ne peut exister à l'état de verre.

La présente invention a donc pour objet une confiserie sans sucre riche en xylitol, caractérisée en ce qu'elle comprend un mélange amorphe de xylitol et de dextrines indigestibles de manière à réduire l'effet rafraîchissant de ladite confiserie.

On entend par riche en xylitol selon la présente invention le fait que la confiserie comprenne en poids sur sec au moins 20% et de préférence au moins 25% de xylitol. En effet, de telles teneurs si basses semblent-elles sont particulièrement élevées et nouvelles pour une confiserie ne présentant pas d'effet rafraîchissant

Le ratio en poids xylitol/dextrines est compris entre 25/75 et 75/25, de préférence entre 30/70 et 70/30 selon le type de confiserie considéré, certains types de confiseries pouvant intégrer plus de xylitol que d'autres, comme les pâtes à mâcher notamment. En dehors de tels ratios, soit l'effet rafraîchissant n'est pas suffisamment réduit, soit la texture des confiseries ne convient pas. Les dextrines agissent comme anti-cristallisant du xylitol, permettant donc sa présence sous forme amorphe dans la confiserie.

On entend par dextrines indigestibles selon la présente invention en particulier les dextrines obtenues par grillage à sec et en milieu acide d'amidon, dites aussi pyrodextrines telles que par exemple celles commercialisées par la Demanderesse sous l'appellation NUTRIOSE^{®}. Ces dextrines peuvent être utilisées telles quelles ou sous leur forme hydrogénée.

Ces dextrines présentent des masses moléculaires en nombre (Mn) pouvant varier de 500 à 4500 g/mole, les meilleurs résultats étant obtenus avec des dextrines de masses moléculaires en nombre de l'ordre de 1000 à 3000 g/mole. Exprimés en masses moléculaires en poids (Mw), les poids moléculaires les plus adéquats selon la présente invention sont compris entre 2800 et 5100 g/mole, et de préférence entre 4000 et 5100 g/mole.

Dans le cas de dextrines à plus faible masse moléculaire, il conviendra pour obtenir de meilleurs résultats de les associer avec d'autres dextrines de Mn ou Mw plus important ou avec des polysaccharides susceptibles d'augmenter la température de transition vitreuse, comme par exemple la gomme arabique.

Selon la présente invention, l'on peut préparer diverses confiseries au xylitol pour lesquelles on ne souhaite pas d'effet rafraîchissant : pâtes à mâcher, sucres cuits, caramels. Ces confiseries pourront, selon une variante avantageuse de la présente invention, être incorporées sous forme d'inclusions à du chocolat sans sucre ou encore enrobées de chocolat, de manière à obtenir une confiserie de chocolat sans sucre et sans effet rafraîchissant, ce qui constitue un produit nouveau. En effet, des confiseries telles que par exemple des pâtes à mâcher ou des fondants riches en xylitol sont connues de l'homme du métier, mais elles étaient jusqu'ici toutes caractérisées par un effet rafraîchissant élevé en raison de la forme cristalline du xylitol qu'elles contenaient.

On pourra également préparer des confiseries dont une partie seulement comprend le mélange selon la présente invention, par exemple des confiseries multi-couches, comprenant au moins une couche de sucre-cuit amorphe, les autres couches étant constituées de xylitol sous forme cristalline.

De même, des confiseries comprenant en outre du mélange xylitol/dextrines, d'autres polyols ou agents de charge en faible quantité, tels que l'isomalt, le lactitol, le mannitol, l'érythritol, l'inuline, les fructo-oligosaccharides, le polydextrose, la gomme arabique sont également visées par la présente invention.

Selon une variante de la présente invention, les confiseries sont des pâtes à mâcher comprenant un mélange de xylitol et de dextrines indigestibles, de préférence hydrogénées. Ces pâtes à mâcher comprennent de 30% à 50% de xylitol en poids, et de 15% à 30% de dextrines.

En ce qui concerne les sucres cuits ou caramels durs, ceux-ci peuvent comprendre de 20% à 55% de xylitol en poids, et de 15% à 75% de dextrines.

Typiquement le ratio en poids xylitol/dextrines pourra être compris entre 30/70 et 70/30, de préférence de 30/70 à 45/55 pour les sucres cuits, de 35/55 à 70/30 pour les pâtes à mâcher. Le ratio 60/40 donne une texture particulièrement satisfaisante de pâte à mâcher. Les sucres cuits les plus concluants comprennent les ratios 30/70 à 45/55, et en particulier 35/65 à 40/60.

Lorsqu'il s'agit de chocolat, on pourra procéder lors de la préparation de celui-ci à des inclusions dont la taille sera fonction de la confiserie souhaitée, voire même une inclusion unique, lesdites inclusions consistant en confiseries selon la présente invention. Ledit chocolat à effet rafraîchissant réduit ou sans effet rafraîchissant pourra contenir des quantités de xylitol bien supérieures à l'art antérieur, et en tout cas d'au moins 10% en poids de xylitol.

L'invention concerne donc également un chocolat sans sucre caractérisé en ce qu'il comprend une confiserie selon la présente invention, sous forme d'une ou plusieurs inclusions.

Ledit chocolat sans sucre sera de préférence un chocolat au maltitol, au lactitol, à l'isomalt.

Selon une autre variante de la présente invention, les confiseries peuvent comprendre un autre polyol, comme notamment le mannitol, de manière à contrôler la texture de la confiserie. Le mannitol cristallise en effet préférentiellement au xylitol en présence des dextrines anti-cristallisantes. On pourra également utiliser à cet effet l'isomalt ou tout autre polyol présentant à la fois une solubilité et un effet rafraîchissant en bouche faibles. De tels polyols sont particulièrement efficaces pour contrôler la texture des confiseries molles telles que décrites plus haut.

Selon une variante avantageuse, les confiseries selon l'invention comprennent en outre du mannitol. De bons résultats ont été obtenus pour des confiseries comprenant en poids sur sec 5 à 15% de mannitol, 18 à 24% de dextrines hydrogénées et 36 à 42% de xylitol.

Pour préparer les confiseries selon la présente invention, les procédés conventionnels peuvent être utilisés. Dans le cas du chocolat, on préparera tout d'abord une confiserie comprenant le mélange de xylitol et de dextrines indigestibles, lesquelles seront ensuite soit inclues dans une matrice de chocolat après avoir été broyées ou découpées, soit enrobées telles quelles de chocolat par un procédé conventionnel de couverture.

Un objet de l'invention est également un mélange amorphe de xylitol et de dextrines indigestibles dans lequel le ratio en poids xylitol/dextrines est compris entre 25/75 et 75/25, préférentiellement entre 70/30 et 30/70 ou encore entre 65/35 et 35/65.

Il va sans dire que la présente invention s'applique à d'autres polyols présentant un effet rafraîchissant, comme notamment l'érythritol. Dans ce cas, les meilleurs résultats ont été obtenus avec un ratio Erythritol/dextrine de 40/60 en termes de texture et d'absence de cooling effect.

L'invention sera mieux comprise à la lecture des exemples qui suivent, qui se veulent illustratifs et non limitatifs.

### Exemple 1 : Préparation d'un caramel selon l'invention

On prépare des caramels selon l'invention comprenant un mélange de xylitol et de dextrines indigestibles.
Essai A : Xylitol, Nutriose® FB6, ratio 40/60
Essais B et C : xylitol, Nutriose® FB6, mannitol dans un ratio 35/55/10

| | Essai A | Essai B | Essai C |
|---|---|---|---|
| Xylitol | 280 | 238 | 241.5 |
| Nutriose®FB6 | 420 | 374 | 379.5 |
| Mannitol | | 68 | 69 |
| Sel | 2 | 2 | 2 |
| Matière grasse végétale(Loders Croklaan) | 60 | 60 | 60 |
| Monostéarate de glycérol | 3 | 3 | 3 |
| vanilline | 0.1 | 0.1 | 0.1 |
| Arôme (IFF) | 3.9 | 3.9 | 3.9 |
| eau | 231 | 231 | 231 |
| Gélatine 200 blooms(Rousselot) | | 20 | 10 |

Mode opératoire : on dissout d'abord les dextrines dans l'eau, on ajoute ensuite les polyols et le sel.

La gélatine est dissoute dans de l'eau à 60°C pendant 1 heure

La matière grasse est fondue.

On cuit le mélange de polyols et de dextrines à 135°C, on ajoute ensuite les autres ingrédients, puis le mélange est refroidi à 90°C, la gélatine est ajoutée, ainsi que les arômes.

La masse cuite est ensuite étalée sur marbre, puis découpée ou formée.

Les confiseries ainsi préparées ne présentent pas d'effet rafraîchissant. Elles peuvent en outre être enrobées de chocolat.

### Exemple 2 : Préparation de confiseries selon l'invention - variation des ratios xylitol / dextrine

Différents ratios xylitol/dextrines sont testés, entre 30/70 et 70/30

Les dextrines utilisées pour cet essai sont des pyrodextrines hydrogénées.

Les quantités sont exprimées en pourcentage en poids.

### 1. préparation de sucres cuits

| ratio | 30/70 | 35/65 | 40/60 | 45/55 | 50/50 | 55/45 | 60/40 | 65/35 | 70/30 |
|---|---|---|---|---|---|---|---|---|---|
| xylitol | 20.62 | 24.06 | 27.5 | 30.94 | 34.38 | 37.82 | 41.26 | 44.69 | 48.13 |
| Dextrine hydrogénée | 48.14 | 44.7 | 41.26 | 37.82 | 34.38 | 30.94 | 27.50 | 24.07 | 20.63 |
| Eau | 30 | 30 | 30 | 30 | 30 | 30 | 30 | 30 | 30 |
| Edulcorant intense | 0.04 | 0.04 | 0.04 | 0.04 | 0.04 | 0.04 | 0.04 | 0.04 | 0.04 |
| Acide citrique | 0.6 | 0.6 | 0.6 | 0.6 | 0.6 | 0.6 | 0.6 | 0.6 | 0.60 |
| Arôme citron | 0.6 | 0.6 | 0.6 | 0.6 | 0.6 | 0.6 | 0.6 | 0.6 | 0.60 |

Le mélange xylitol/dextrine est dissout dans l'eau et cuit à 180°C. Pendant le refroidissement, l'édulcorant intense est ajouté, ainsi que l'arôme et le colorant.

La masse est ensuite mise en forme par coulage dans des moules.

Les confiseries sont démoulées après refroidissement.

Les essais les plus concluants concernent les ratios compris entre 30/70 et 45/55, et en particulier 35/65 et 40/60.

Le ratio 50/50 donne des sucres cuits un peu mous.

A partir de 55/45, le démoulage devient difficile, et au-delà de 70/30, la masse devient très collante.

En deçà de 30/70, la coulée est difficile et le mélange mousse fortement. La cuisson devient également difficile.

Les confiseries obtenues ne présentent pas d'effet rafraîchissant.

### 2. préparation de caramels mous

Les quantités sont exprimées en pourcentage en poids.

| ratio | 60/40 | 65/35 | 70/30 | 60/40 | 65/35 | 65/35 |
|---|---|---|---|---|---|---|
| Xylitol | 36 | 39 | 42 | 36 | 42 | 42 |
| Dextrine hydrogénée | 24 | 21 | 18 | 24 | 18 | 18 |
| Sel | 0.2 | 0.2 | 0.2 | 0.2 | 0.2 | 0.2 |
| POLYSORB® 75/08/55 | 10 | 10 | 10 | 15 | 15 | 20 |
| Eau | 7.8 | 7.8 | 7.8 | 7.8 | 7.8 | 7.8 |
| Matière grasse végétale | 6 | 6 | 6 | 6 | 6 | 6 |
| Gélatine | 0.6 | 0.6 | 0.6 | 0.6 | 0.6 | 0.6 |
| vanilline | 0.02 | 0.02 | 0.02 | 0.02 | 0.02 | 0.02 |
| Arôme caramel | 0.38 | 0.38 | 0.38 | 0.38 | 0.38 | 0.38 |
| mannitol | 15 | 15 | 15 | 10 | 10 | 5 |

Les meilleurs résultats sont obtenus avec le ratio 65/35. Au-delà (70/30), on observe un léger effet rafraîchissant.

Le ratio 60/40 donne une texture satisfaisante de pâte à mâcher.

Les confiseries comprenant le ratio 65/35 sont ensuite enrobées de chocolat, on obtient alors une confiserie de chocolat à haute teneur en xylitol sans effet rafraîchissant

### 3. préparation de gommes dures

Les quantités sont exprimées en pourcentage en poids.

| ratio | 55/45 | 60/40 | 65/35 |
|---|---|---|---|
| Xylitol | 20.8 | 22.75 | 24.62 |
| Dextrine hydrogénée | 17.08 | 15.12 | 13.25 |
| Eau | 11 | 11 | 11 |
| Gomme arabique (50%) | 49.96 | 49.96 | 49.96 |
| Acide citrique (50%) | 0.97 | 0.97 | 0.97 |
| Acesulfame K | 0.1 | 0.1 | 0.1 |
| Arôme | 0.1 | 0.1 | 0.1 |

La cuisson de ces mélanges est effectuée à 128°C après quoi ils sont coulés dans des moules et refroidis.

Selon l'invention, il est possible d'obtenir suivants les ratios testés des gommes dures à haute teneur en xylitol et sans effet rafraîchissant

### 4. préparation de sucres-cuits bicouches

On prépare un sucre cuit comprenant une couche à haute teneur en xylitol sans effet rafraîchissant selon l'invention et une couche cristallisée de xylitol seul de manière à proposer au consommateur une confiserie présentant une face rafraîchissante et une face neutre. Les confiseries sont préparées selon la formule suivante :

| Couche sans effet rafraîchissant (ratio xylitol/dextrine 40/60) | | |
|---|---|---|
| | composition en poids | Composition du produit fini |
| Xylitol | 29.5 | 38.55% |
| Nutriose® FB 06 | 44.25 | 57.82% |
| eau | 25 | 0.00% |
| Acide lactique | 0.75 | 0.98% |
| Acesulfame K | 0.05 | 0.07% |
| Arôme citron QL 70945 | 0.35 | 0.46% |
| Arôme lait QL 17162 | 0.05 | 0.07% |
| Colorant jaune (10%) | 0.05 | 0.07% |
| Teneur en eau | -- | 2.00% |
| Total : (kg) | 100 | 100.00% |

| Couche cristallisée au xylitol | | |
|---|---|---|
| | Composition en poids | Composition du produit fini |
| Xylitol | 99.95 | 99.73% |
| Mint flavor QL 63127 | 0.05 | 0.07% |
| Moisture | -- | 0.20% |
| Total : (kg) | 100 | 100.00% |

### Mode opératoire :

Couche sans effet rafraîchissant (transparente et jaune)
On mélange le Xylitol et la dextrine Nutriose® FB 06 dans l'eau, et on cuit le mélange à 120°C
On ajoute ensuite l'arôme, l'acide et le colorant
Le mélange est coulé dans des moules, puis refroidi.

Couche cristallisée (blanche)
On fait fondre d'abord 85 - 90% Xylitol à 95°C
On ajoute ensuite les 10 - 15% restant de Xylitol comme amorce dans le sirop de Xylitol fondu,
Le sirop mélangé soigneusement est ensuite déposé à la main sur la couche précédente,
Les confiseries obtenues sont ensuite refroidies puis récupérées.

On obtient des confiseries bicouches, dont une face seulement, conformément à l'invention, possède un effet rafraîchissant et l'autre pas.

### Exemple 3 : Préparation de confiseries selon l'invention variation des ratios erythritol / dextrine

Différents ratios erythritol/dextrines (E/D) sont testés, entre 30/70 et 70/30

Les dextrines indigestibles utilisées pour cet essai sont des maltodextrines branchées.

Les quantités sont exprimées en pourcentage en poids.

### 1. préparation de caramels durs et de caramels mous

| Formulation | | | | | |
|---|---|---|---|---|---|
| Ingredients | Durs E/D 40/60 | Durs E/D 50/50 | Mous E/D 40/60 | Mous E/D 45/55 | Mous E/D 50/50 |
| | En poids | En poids | En poids | En poids | En poids |
| Erythritol | 25.44 | 31.80 | 20.64 | 23.20 | 25.80 |
| Dextrine | 38.16 | 31.80 | 30.96 | 28.38 | 25.80 |
| Mannitol | 4.00 | 4.00 | - | - | - |
| Polysorb ^{®} 75/08/55 | - | - | 14.00 | 14.00 | 14.00 |
| Sel | 0.20 | 0.20 | 0.20 | 0.20 | 0.20 |
| Eau | 21.20 | 21.20 | 17.20 | 17.20 | 17.20 |
| Matière grasse végétale | 6.00 | 6.00 | 6.00 | 6.00 | 6.00 |
| Lécithine | 0.60 | 0.60 | 0.60 | 0.60 | 0.60 |
| Mannitol (amorce) | 4.00 | 4.00 | 10.00 | 10.00 | 10.00 |
| Vanilline | 0.02 | 0.02 | 0.02 | 0.02 | 0.02 |
| Arôme caramel | 0.38 | 0.38 | 0.38 | 0.38 | 0.38 |
| Total | 100.0 | 100.0 | 100.0 | 100.0 | 100.0 |

| Paramètres de cuisson | | | | | |
|---|---|---|---|---|---|
| Température | 170°C | 170°C | 118°C | 118.0°C | 120.0°C |
| Les caramels sont enrobés de chocolat sans sucre | | | | | |

Les meilleurs résultats en termes de texture et d'absence de cooling effect sont obtenus avec le ratio E/N = 40/60 que ce soit pour les caramels durs ou pour les caramels mous.

## Revendications

1. Confiserie sans sucre riche en xylitol, **caractérisée en ce qu'**elle comprend un mélange amorphe de xylitol et de dextrines indigestibles.

2. Confiserie selon la revendication 1, **caractérisée en ce qu'**elle comprend un mélange amorphe de xylitol et de dextrines indigestibles dans un ratio en poids compris entre 25/75 et 75/25.

3. Confiserie selon l'une ou l'autre des revendications 1 et 2, **caractérisée en ce qu'**elle est un sucre cuit, un caramel dur, un caramel mou, un toffee, une pâte à mâcher ou un chocolat.

4. Confiserie selon l'une quelconque des revendications 1 à 3, **caractérisée en ce qu'**elle comprend sur sec de 20 à 55% de xylitol et 15 à 75% de dextrines.

5. Confiserie selon l'une quelconque des revendications 1 à 4, **caractérisée en ce qu'**elle comprend en outre du mannitol, du maltitol, de l'isomalt, de l'inuline ou de la gomme arabique.

6. Confiserie selon la revendication 5, **caractérisée en ce qu'**elle comprend en poids sur sec 36 à 42% de xylitol, 18 à 24% de dextrines et de 5 à 15% de mannitol.

7. Confiserie selon l'une quelconque des revendications 1 à 6, **caractérisée en ce que** lesdites dextrines sont hydrogénées.

8. Confiserie selon l'une quelconque des revendications 1 à 7, **caractérisée en ce qu'**elle est incluse dans un chocolat sans sucre, noir, blanc ou au lait.

9. Confiserie selon la revendication 8, **caractérisée en ce que** ledit chocolat est un chocolat au maltitol.

10. Confiserie selon l'une quelconque des revendications 1 à 7, **caractérisée en ce qu'**elle est une pâte à mâcher.

11. Confiserie sans sucre riche en érythritol, **caractérisée en ce qu'**elle comprend un mélange amorphe d'érythritol et de dextrines indigestibles.

12. Mélange amorphe de xylitol et de dextrines indigestibles dans lequel le ratio en poids xylitol/dextrines est compris entre 25/75 et 75/25.

13. Mélange amorphe d'érythritol et de dextrines indigestibles dans lequel le ratio en poids érythritol/dextrines est compris entre 25/75 et 75/25.
